Europäisches Patentamt

European Patent Office

Office européen des brevets

(19)

(11) **EP 1 095 955 A1**

(12) **DEMANDE DE BREVET EUROPEEN**

(43) Date de publication:
**02.05.2001 Bulletin 2001/18**

(51) Int Cl.⁷: **C08G 12/00**, C08L 1/28,
C08K 13/02, C08K 3/00,
C08K 5/09
// (C08K13/02, 3:00, 5:09)

(21) Numéro de dépôt: **00402933.6**

(22) Date de dépôt: **24.10.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **26.10.1999 FR 9913354**

(71) Demandeur: **Atofina**
**92800 Puteaux (FR)**

(72) Inventeur: **Chenard, Jean-Yves**
**64000 Pau (FR)**

(74) Mandataire: **Rieux, Michel et al**
**Atofina**
**D.C.R.D./D.P.I.**
**4, Cours Michelet,**
**La Défense 10**
**92091 Paris la Défense Cedex (FR)**

(54) **Durcisseurs liquides destinés à être mélangés à une résine aminoplaste, leur procédé de fabrication et les mélanges collants résultants**

(57) Ce durcisseur liquide destiné à être mélangé à une résine aqueuse aminoplaste choisie parmi les résines urée-formol et les résines mélamine-urée-formol afin de constituer un mélange collant pour le collage du bois, en particulier pour la fabrication du contreplaqué, est caractérisé par le fait qu'il est constitué par ou qu'il comprend : (A) 5 à 20 parties en poids d'au moins un sel d'ammonium d'un acide inorganique fort ; (B) 2 à 15 parties en poids d'au moins un sel de sodium d'une carboxyméthyl cellulose ayant une masse moléculaire moyenne en poids ($\overline{Mw}$) ne dépassant pas 200 000 ; (C) 0,5 à 5 parties en poids d'au moins un acide choisi parmi les acides mono- ou polycarboxyliques ; et (D) le complément à 100 parties en poids d'eau, l'eau étant par ailleurs présente en quantité suffisante pour dissoudre les constituants (A), (B) et (C).

## EP 1 095 955 A1

**Description**

La présente invention concerne les liants aminoplastes bicomposants améliorés destinés au collage du bois, et, en particulier, à la fabrication du contreplaqué.

La fabrication du contreplaqué à partir de plis de bois déroulé comprend classiquement les opérations suivantes :

- encollage des plis à l'aide d'un liant aminoplaste ou phénolique ;
- empilement des plis croisés ;
- prépressage à froid ; et
- pressage à chaud

Les liants aminoplastes usuels comprennent :

- une résine de base pour contreplaqué soit de type urée/formol (applications intérieures) soit de type mélamine/ urée/formol (applications extérieures). Ces résines pour contreplaqué, disponibles dans le commerce sont spécialement condensées afin d'offrir un caractère auto-adhésif ("tack") suffisant pour solidariser les plis lors du prépressage à froid ;
- un ou plusieurs durcisseurs tels que $NH_4Cl$, $SO_4(NH_4)_2$ et le résorcinol, lesquels sont le plus souvent utilisés sous forme de solutions aqueuses ;
- des charges diverses telles que la farine de grignons d'olive, la farine de bois, le kaolin, etc., qui jouent le rôle d'agent épaississant.

Les mélanges collants ainsi obtenus ont une viscosité et un tack à froid convenables. En revanche, leur fabrication est laborieuse et ne peut se faire qu'en batch dans un mélangeur indépendant de la ligne d'encollage.

Des formules bicomposantes faisant appel à des durcisseurs liquides ont également été décrites pour cette application, par exemple dans la demande de brevet suédois A-78-10 982 (liant urée/formol) ou dans la demande de brevet allemand DE-A-19 603 998 (liant mélamine/urée/formol). Les durcisseurs liquides sont a priori plus faciles à mélanger aux résines urée/formol ou mélamine/urée/formol, mais ils posent des problèmes spécifiques :

- stabilité au stockage réduite (possible décantation des charges) ; et
- viscosité et/ou tack insuffisants à cause de la dilution du mélange collant par l'eau supplémentaire introduite avec le durcisseur.

Il est de ce fait nécessaire d'ajouter non seulement au durcisseur mais souvent également à la résine de base divers agents épaississants et/ou charges spécifiques. Ainsi, dans le cas de la demande de brevet allemand DE-A-19 603 988, on doit mélanger à la résine mélamine/urée/formol utilisée, avant rajout du durcisseur, 8 à 10% en poids de fibres de cellulose. Cette opération complique notablement la fabrication des mélanges collants et retire à l'utilisation des durcisseurs liquides une partie de sa justification. De telles formules ne peuvent pas être considérées comme véritablement bicomposantes.

La présente invention permet de résoudre cette difficulté.

A cet effet, elle a pour objet un durcisseur liquide destiné à être mélangé à une résine aqueuse aminoplaste choisie parmi les résines urée-formol et les résines mélamine-urée-formol afin de constituer un mélange collant pour le collage du bois, en particulier pour la fabrication du contreplaqué, caractérisé par le fait qu'il est constitué par ou qu'il comprend :

(A) 5 à 20 parties en poids d'au moins un sel d'ammonium d'un acide inorganique fort ;
(B) 2 à 15 parties en poids d'au moins un sel de sodium d'une carboxyméthyl cellulose ayant une masse moléculaire moyenne en poids ($\overline{Mw}$) ne dépassant pas 200 000 ;
(C) 0,5 à 5 parties en poids d'au moins un acide choisi parmi les acides mono- ou polycarboxyliques ; et
(D) le complément à 100 parties en poids d'eau, l'eau étant par ailleurs présente en quantité suffisante pour dissoudre les constituants (A), (B) et (C).

Le constituant (A) est avantageusement présent à raison de 10 à 15 parties en poids.

Le constituant (A) est notamment choisi parmi le sulfate d'ammonium, le nitrate d'ammonium et le chlorure d'ammonium. Le sel d'ammonium préféré est le sulfate d'ammonium.

Ce sel d'ammonium joue le rôle de durcisseur principal. Il assure simultanément une stabilité correcte au stockage du durcisseur et une bonne réactivité du mélange collant.

2

Le constituant (B) du durcisseur selon l'invention est notamment présent à raison de 7 à 11 parties en poids.

Ce constituant (B) est un polymère hydrosoluble particulier, utilisé comme épaississant du ou des constituants durcisseurs du produit durcisseur de l'invention, et constitué par un sel de sodium de carboxyméthyl cellulose avantageusement choisi parmi ceux ayant une masse moléculaire moyenne en poids ($\overline{Mw}$) comprise entre 50 000 et 200 000, en particulier entre 7 500 et 15 000 ; un degré de substitution de 0,7 à 0,9 ; et une viscosité dans l'eau à 20°C de 2 500 à 7 500 mPa.s sous un cisaillement de 6,6 s$^{-1}$, de 1 000 à 3 000 mPa.s sous un cisaillement de 170 s$^{-1}$, à une concentration de 10% en poids.

De telles carboxyméthyl celluloses sont disponibles dans le commerce sous la dénomination "CMC de faible viscosité".

Les CMC de masse moléculaire plus élevés (notamment de 200 000 ou davantage) - malgré leur effet viscosifiant a priori supérieur, ne conviennent pas pour les raisons suivantes :

- dissolution difficile ou incomplète dans l'eau aux teneurs nécessaires ;
- comportement rhéologique des solutions inadapté, à savoir :

  • forte pseudo plasticité : la viscosité chute rapidement aux fortes vitesses de cisaillement ; et
  • effet Weissenberg prononcé : la solution monte le long des cylindres en rotation ; et

- compatibilité insuffisante avec les durcisseurs utilisés tels que $SO_4(NH_4)_2$, le résorcinol, etc., conduisant à une reprécipitation du polymère (B) au cours de la fabrication.

L'effet viscosifiant obtenu par addition de CMC dépend fortement du sel d'ammonium utilisé. Plus précisément, la viscosité obtenue, toutes choses égales ailleurs, avec un sel d'ammonium d'un acide divalent est plus élevée qu'avec un sel d'ammonium d'un acide monovalent. Le sulfate d'ammonium est pour cette raison préféré au nitrate ou au chlorure d'ammonium, malgré une compatibilité inférieure avec la CMC. La teneur en sulfate d'ammonium des durcisseurs selon l'invention ne doit de préférence pas dépasser 15% en poids afin d'éviter toute reprécipitation du polymère (B).

Le ou les acides (C) sont notamment choisis parmi l'acide formique, l'acide acétique, l'acide oxalique et l'acide citrique. Cet acide poly(carboxylique) sert à contrer l'effet tampon du sel de sodium de la CMC. Il permet de ramener à un niveau normal et d'ajuster dans une certaine mesure la réactivité du mélange collant. L'utilisation d'acide carboxylique à forte concentration - en particulier sans sel d'ammonium - conduit à des durcisseurs dont la stabilité au stockage est insuffisante (montée rapide en viscosité) et ne fait pas partie de la présente invention.

Le durcisseur selon la présente invention peut également comprendre en outre :

- du résorcinol à titre de durcisseur secondaire, lequel permet d'améliorer la tenue à l'humidité des collages réalisés (en application extérieure donc avec les résines mélamine/urée/formol) ; le résorcinol est utilisé dans une quantité allant jusqu'à 30 parties en poids, étant en particulier de 15 à 30 parties en poids, pour 100 parties en poids de durcisseur total ;
- de l'hexaméthylène tétramine, à titre de retardateur, dans une quantité allant jusqu'à 15 parties en poids, étant en particulier de 0 à 5 parties en poids, pour 100 parties en poids de durcisseur total ;
- de l'urée, à titre de retardateur, dans une quantité allant jusqu'à 15 parties en poids, en particulier de 0 à 5 parties en poids pour 100 parties en poids de durcisseur total ;
- une quantité allant jusqu'à 30 parties en poids pour 100 parties en poids de durcisseur total d'au moins une charge, choisie notamment parmi la farine de grignons d'olive, la farine de bois et le kaolin (l'ajout de charges aux durcisseurs de l'invention ne constitue cependant pas une variante préférée car les charges diminuent la stabilité au stockage de ces durcisseurs) ;
- une quantité allant jusqu'à 2 parties en poids pour 100 parties en poids de durcisseur total d'au moins un additif usuel choisi notamment parmi les agents anti-mousse et les agents tensio-actifs.

La viscosité initiale préférée des durcisseurs selon l'invention, mesurée à 20°C est de 10 000 à 20 000 mPa.s sous un cisaillement de 6 s$^{-1}$ et de 5 000 à 10 0000 mPa.s sous un cisaillement de 170 s$^{-1}$.

La stabilité au stockage des durcisseurs selon l'invention est satisfaisante tant à température ordinaire qu'à basse température, comme cela est démontré par les exemples ci-après. Dans le cas du stockage à basse température, il est nécessaire de réhomogénéiser le durcisseur par agitation mécanique avant utilisation.

La présente invention a également pour objet un procédé de fabrication d'un durcisseur tel que défini ci-dessus, caractérisé par le fait qu'on introduit dans une solution aqueuse du constituant (B), à une température de 15-30°C, successivement le constituant (A), puis le constituant (C), les constituants facultatifs étant introduits ultérieurement à la même température.

**EP 1 095 955 A1**

La présente invention a également pour objet un mélange collant pour le collage du bois, en particulier pour la fabrication du contreplaqué, caractérisé par le fait qu'il est constitué par :

- une résine aqueuse aminoplaste choisie parmi les résines urée-formol et mélamine-urée-formol ; et
- pour 100 parties en poids de ladite résine aqueuse aminoplaste, 5 à 30 parties en poids d'un durcisseur tel que défini ci-dessus.

La résine présente avantageusement un extrait sec de 63 à 69% (2h à 120°C), et une viscosité initiale de 500 - 1 500 mPa.s à 20°C.

Du fait de leur condensation poussée, ces résines présentent une viscosité qui évolue sensiblement au stockage. La viscosité des mélanges collants obtenus avec un même durcisseur peut de ce fait varier de façon importante.

Le temps de gel à 80°C des mélanges collants de l'invention est généralement de 90 à 240 secondes, et leur viscosité initiale optimale à 20°C est généralement de 1 000 - 5 000 mPa.s, notamment de 2000-3000 mPa.s (viscosité Brookfield LVT, sol N°3 v = 12t/mn).

Les mélanges collants de l'invention présentent avantageusement une durée de vie en pot supérieure ou égale à 1 heure, en particulier supérieure ou égale à 2 heures.

Au départ d'une même résine, les durcisseurs liquides selon l'invention offrent des caractéristiques de mise en oeuvre et des performances mécaniques, avant et après vieillissement, au moins équivalentes à celles obtenues avec les mélanges collants classiques. Ils autorisent une fabrication simplifiée des mélanges collants. Une fabrication en continu, par exemple à l'aide de mélangeur de type statique, est en particulier possible. Un tel procédé permet de réduire considérablement le délai s'écoulant entre la fabrication du mélange collant et son utilisation. Il devient ainsi possible de mettre en oeuvre des mélanges collants plus réactifs, donc d'améliorer la productibilité du procédé de fabrication.

Les Exemples suivants illustrent la présente invention sans toutefois en limiter la portée. Dans ces Exemples, les pourcentages sont donnés en poids sauf indication contraire.

EXEMPLES 1 à 6 : Préparation de durcisseurs liquides selon l'invention.

Dans chacun de ces Exemples 1 à 6, on a utilisé, comme épaississant du durcisseur préparé, une solution aqueuse soit à 12,5%, soit à 20%, de carboxyméthyl cellulose sodique, disponible dans le commerce sous la dénomination "CMC de faible viscosité". Les caractéristiques typiques de ces CMC de faible viscosité sont les suivantes :

- Teneur > 96%
- Masse moléculaire moyenne en poids $\overline{Mw} \simeq 90\,000$
- Degré de substitution $\simeq 0,7$
- Viscosité dans l'eau à 20°C :

| Concentration en poids (%) | 12,5 | 20 |
|---|---|---|
| Viscosité∗ (mPa.s) mesurée à | | |
| 6,6 s$^{-1}$ | 10 900 | 110 000 |
| 28 s$^{-1}$ | 7 650 | 60 000 |
| 168 s$^{-1}$ | 4 300 | non mesurable |

∗ viscosimètre RHEOMAT 115, solides DIN

Mode opératoire général

500 g d'une solution aqueuse à 12,5 ou 20% de CMC de faible viscosité sont placés dans un réacteur en verre muni d'un agitateur à ancre, d'une sonde de température et d'un chauffage par double enveloppe. On affiche une température de consigne de 25°C.

Après équilibrage de la température, on ajoute par fractions successives une quantité d'un sel d'ammonium comme indiqué dans le Tableau 1, puis 180 g de résorcinol. L'addition est effectuée suffisamment lentement pour que la température du milieu réactionnel ne descende pas en dessous de 20°C (la dissolution des réactifs est endothermique).

On verse ensuite une quantité d'un acide telle qu'indiquée dans le Tableau 1. Le durcisseur obtenu est un liquide présentant les caractéristiques figurant dans le Tableau 1.

Tableau 1

| Exemple | | | 1 | 2 | 3 | 4 | 5 | 6 |
|---|---|---|---|---|---|---|---|---|
| Concentration de la solution de CMC (%) | | | 12,5 | 12,5 | 12,5 | 12,5 | 12,5 | 20 |
| Sel d'ammonium (quantité en g) | | | $SO_4(NH_4)_2$ (100) | $SO_4(NH_4)_2$ (100) | $SO_4(NH_4)_2$ (100) | $SO_4(NH_4)_2$ (100) | $SO_4(NH_4)_2$ (100) | $NO_3NH_4$ (150) |
| Acide (quantité en g) | | | formique à 98% (6) | formique à 98% (9) | formique à 98 % (30) | citrique (9) | citrique (45) | formique à 98 % (6) |
| Caractéristique du durcisseur liquide obtenu pH (20°C) d (20°C) | | | limpide ~ 4,8 ~ 1,17 | limpide ~ 4,7 ~ 1,17 | limpide ~ 4,3 ~ 1,17 | limpide | translucide | limpide |
| Viscosité* à 20°C (mPa.s) mesurée à différents cisaillements | initiale | $6,6\ s^{-1}$ $27\ s^{-1}$ $28\ s^{-1}$ $168\ s^{-1}$ | 10600 7700 4280 | 12500 9100 5030 | 10100 8100 4700 | 12350 9080 5000 | 12000 9080 5060 | 36500 26200 20500 |
| | Après 10 jours | $6,6\ s^{-1}$ $27\ s^{-1}$ $168\ s^{-1}$ | | | | | | 43200 28800 22065 |
| | Après 12 jours | $6,6\ s^{-1}$ $27\ s^{-1}$ $28\ s^{-1}$ $168\ s^{-1}$ | | | | 14500 9850 5100 | 14580 9600 4870 | |
| | Après 15 jours | $6,6\ s^{-1}$ $27\ s^{-1}$ $168\ s^{-1}$ | | | 17700 10800 5020 | | | |
| | Après 30 jours | $6,6\ s^{-1}$ $27\ s^{-1}$ $168\ s^{-1}$ | | | 21000 12100 5200 | | | 48200 30500 22800 |
| | | | | Le durcisseur obtenu a été congelé 7h à -10°C. Il a ensuite été ramené à 20°C. On a constaté la présence de gels qui ont disparu après quelques minutes d'agitation mécanique. Après rehomogénéisation, la viscosité mesurée est identique à celle du produit avant congélation. | | Après 16 h à -10°C puis rehomogénéisation par agitation mécanique à 20°C, la viscosité du durcisseur est identique à celle mesurée avant congélation | Après 16 h à -10°C puis rehomogénéisation par agitation mécanique à 20°C, la viscosité du durcisseur est identique à celle mesurée avant congélation | |

\* viscosimètre RHEOMAT 115, solide DIN 125

EXEMPLES 7 à 14 : Préparation de mélanges collants

Chacun des durcisseurs des Exemples 1 à 6 a été mélangé dans les proportions indiquées dans le Tableau 2 à une résine mélamine-urée-formol (résine MUF) ayant les caractéristiques suivantes :

- Extrait sec (2 h ; 120°C) ≃ 65%
- Viscosité initiale à 20°C ≃ 900-1000 mPa.s

(Du fait de leur condensation poussée, la viscosité de ces résines présente la particularité d'évoluer sensiblement au stockage ; la viscosité des mélanges collants obtenus avec un même durcisseur peut de ce fait varier de façon importante).
On a fait figurer dans le Tableau 2 :

- le temps de gel à 80°C, mesuré sur 10 g de mélange (fluide caloporteur : eau) ;
- la viscosité initiale à 20° des mélanges collants et son évolution dans le temps ; et
- la durée de vie en pot approximative (doublement de la viscosité initiale) des mélanges obtenus.

On note que la viscosité initiale des mélanges collants se situe dans la zone de 2000-3000 Pa.s et que les durées de vie en pot sont ≥ 2 heures, ce qui est satisfaisant.

Tableau 2

| Exemple | | 7 | 8 | 9 | 10 | 11 | 12 | 13 | 14 |
|---|---|---|---|---|---|---|---|---|---|
| Viscosité de la résine MUF utilisée (mPa.s) | | 900 | 1200 | 900 | 950 | 960 | 1300 | 1400 | 1800 |
| Durcisseur | de l'Exemple | 1 | 1 | 1 | 2 | 3 | 4 | 5 | 6 |
| | teneur (pour 100 parties de résine) | 7,9 | 7,9 | 15,7 | 7,9 | 8,1 | 7,9 | 8,25 | 8,36 |
| Temps de gel à 80°C (s) | | 210 | 200 | 155 | 200 | 155 | 205 | 165 | 170 |
| Viscosité du mélange réactionnel à 20°C* (mPa.s) | après 15 minutes | 1600 | 1940 | 2200 | – | 1930 | 2470 | 2650 | 2570 |
| | après 1 heure | 2000 | 2490 | 2600 | – | 2500 | 3100 | 3800 | – |
| | après 2 heures | – | 2800 | 3160 | – | 3040 | – | 5200 | – |
| Durée de vie en pot ** (minutes) | | – | 180 | 180 | – | 130 | – | 120 | – |

\*    Viscosité Brookfield LVT, mobile n° = 3, 12 tours/minute

\*\*   Doublement de la viscosité initiale

EP 1 095 955 A1

**EP 1 095 955 A1**

EXEMPLE 15 : Fabrication de contreplaqués à l'aide des mélanges collants de l'invention.

Avec le mélange collant de l'Exemple 7, on a fabriqué un contreplaqué ayant la structure suivante :

- contreplaqué 7 plis, dimensions : 500 x 500 x 15 mm ;
- plis 1 et 7 (faces) : okoumé, 1,1 mm d'épaisseur
- plis 2,4 et 6 : okoumé, 3 mm d'épaisseur
- plis 3 et 5 : okoumé, 2 mm d'épaisseur

Chaque pli du contreplaqué est encollé sur l'une de ses faces avec 450 g/m$^2$ du mélange collant, puis stocké 15 minutes à la température ordinaire (de l'ordre de 20°C). Les plis sont alors empilés (les plis 2, 4, 6 étant croisés à 90°), puis prépressés à froid (10 minutes - 0,5 MPa (5 bars)). Après 15 minutes de repos, la plaque obtenue est alors pressée à 120°C sous 1,2 MPa (12 bars) pendant 8 minutes.
Le même essai est répété à partir d'un mélange collant de référence formulé à partir de durcisseurs en poudre selon le procédé suivant :

- on disperse sous agitation mécanique énergique 100 g de farine de grignons d'olive dans 1000 g de la résine mélamine-urée-formol décrite à l'Exemple 7 ;
- après l'obtention d'un mélange homogène, on ajoute successivement, toujours sous agitation, 18 g de résorcinol puis 30 g d'une solution aqueuse à 0,33% de sulfate d'ammonium.

On effectue sur chacune des plaques obtenues les essais suivants donnant une résistance au cisaillement respectivement initiale et après 72 heures dans l'eau bouillante :

• Essai de cisaillement réalisé conformément à la méthode d'essai EN 314-1, après simple conditionnement de 4 semaines à 20°C, 65% d'humidité relative :

  - les éprouvettes utilisées ont des dimensions de 110 x 25 x 15 mm ;
  - les plans de collage face, contre face et centre (cf. EN 314-1 page 2) ont été testés séparément ;
  - la vitesse de tirage utilisée est de 3 mm/mn ;
  - la surface des joints testés est de 25 x 25 = 625 mm$^2$.

• Essai faisant partie de la norme EN 314 prévu pour les applications en milieu extérieur.

Les résultats obtenus figurent dans le Tableau 3 ci-après.
On note que le mélange collant selon l'invention fait jeu égal avec le témoin aussi bien dans l'essai avant vieillissement que dans l'essai après 72 heures dans l'eau bouillante, toutes les résistances obtenues dépassant 1 MPa.
Les mélanges collants selon l'invention permettent donc de fabriquer des contreplaqués pour applications extérieures.
Par ailleurs, on a mesuré le dégagement de formol sur des échantillons des contreplaqués ainsi fabriqués. Cette détermination a été effectuée selon la norme EN 1084 sur des échantillons de dimensions 400 x 50 x 15 mm préalablement conditionnés pendant 4 semaines à 20°C et 65% d'humidité relative. Les résultats obtenus sont de 0,1 ; 0,09 mg/m$^2$ h (deux déterminations) pour le contreplaqué obtenu avec le mélange collant de l'Exemple 7. Ce contreplaqué est en classe A ($\leq$ 3,5 mg/m$^2$ h), ce qui est satisfaisant.

Tableau 3 .

Caractéristiques mécaniques des contreplaqués

| Résistance au cisaillement (N/mm$^2$) | Contreplaqué | de l'invention (mélange collant de l'Exemple 7) | de référence |
|---|---|---|---|
| Initiale | Plan de collage testé | | |
| | Face | 1,84 | 2,3 |
| | Contre face | 2,41 | 2,17 |
| | Centre | 2,05 | 1,66 |
| Après 72 heures dans l'eau bouillante | Plan de collage testé | | |
| | Face | 1,37 (0,19*) | 1,62 (0,25*) |
| | Contre face | 1,86 (0,3*) | 1,68 (0,12*) |
| | Centre | 1,4 (0,24*) | 1,05 (0,09*) |

* Ecart-type (sur 8 éprouvettes)

**Revendications**

1. Durcisseur liquide destiné à être mélangé à une résine aqueuse aminoplaste choisie parmi les résines urée-formol et les résines mélamine-urée-formol afin de constituer un mélange collant pour le collage du bois, en particulier pour la fabrication du contreplaqué,
caractérisé par le fait qu'il est constitué par ou qu'il comprend :

   (A) 5 à 20 parties en poids d'au moins un sel d'ammonium d'un acide inorganique fort ;
   (B) 2 à 15 parties en poids d'au moins un sel de sodium d'une carboxyméthyl cellulose ayant une masse moléculaire moyenne en poids ($\overline{\text{Mw}}$) ne dépassant pas 200 000 ;
   (C) 0,5 à 5 parties en poids d'au moins un acide choisi parmi les acides mono- ou polycarboxyliques ; et
   (D) le complément à 100 parties en poids d'eau, l'eau étant par ailleurs présente en quantité suffisante pour dissoudre les constituants (A), (B) et (C).

2. Durcisseur liquide selon la revendication 1, caractérisé par le fait que le constituant (A) est présent à raison de 10 à 15 parties en poids.

3. Durcisseur liquide selon l'une des revendications 1 et 2, caractérisé par le fait que le ou les sels d'ammonium (A) sont choisis parmi le sulfate d'ammonium, le nitrate d'ammonium et le chlorure d'ammonium.

4. Durcisseur selon la revendication 3, caractérisé par le fait que le sel d'ammonium (A) est le sulfate d'ammonium.

**5.** Durcisseur selon l'une des revendications 1 à 4, caractérisé par le fait que le constituant (B) est présent à raison de 7 à 11 parties en poids.

**6.** Durcisseur selon l'une des revendications 1 à 5, caractérisé par le fait que le ou les sels de sodium de carboxyméthyl cellulose (B) sont choisis parmi ceux ayant une masse moléculaire moyenne en poids ($\overline{Mw}$) comprise entre 50 000 et 200 000, en particulier entre 7 500 et 150 000 ; un degré de substitution de 0,7 à 0,9; et une viscosité dans l'eau à 20°C de 2 500 à 7 500 mPa.s sous un cisaillement de 6,6 s$^{-1}$, de 1 000 à 3 000 mPa.s sous un cisaillement de 170 s$^{-1}$, à une concentration de 10% en poids.

**7.** Durcisseur selon l'une des revendications 1 à 6, caractérisé par le fait que le ou les acides (C) sont choisis parmi l'acide formique, l'acide acétique, l'acide oxalique et l'acide citrique.

**8.** Durcisseur selon l'une des revendications 1 à 7, caractérisé par le fait qu'il comprend en outre du résorcinol dans une quantité allant jusqu'à 30 parties en poids, étant en particulier de 15 à 30 parties en poids, pour 100 parties en poids de durcisseur total.

**9.** Durcisseur selon l'une des revendications 1 à 8, caractérisé par le fait qu'il comprend en outre de l'hexaméthylène tétramine dans une quantité allant jusqu'à 15 parties en poids, étant en particulier de 0 à 5 parties en poids, pour 100 parties en poids de durcisseur total.

**10.** Durcisseur selon l'une des revendications 1 à 9, caractérisé par le fait qu'il comprend en outre de l'urée dans une quantité allant jusqu'à 15 parties en poids, en particulier de 0 à 5 parties en poids, pour 100 parties en poids de durcisseur total.

**11.** Durcisseur selon l'une des revendications 1 à 10, caractérisé par le fait qu'il comprend en outre une quantité allant jusqu'à 30 parties en poids pour 100 parties en poids de durcisseur total d'au moins une charge, choisie notamment parmi la farine de grignons d'olive, la farine de bois et le kaolin.

**12.** Durcisseur selon l'une des revendications 1 à 11, caractérisé par le fait qu'il comprend en outre une quantité allant jusqu'à 2 parties en poids pour 100 parties en poids de durcisseur total d'au moins un additif usuel choisi notamment parmi les agents anti-mousse et les agents tensio-actifs.

**13.** Durcisseur selon l'une des revendications 1 à 12, caractérisé par le fait que sa viscosité initiale est de 10 000 à 20 000 mPa.s sous un cisaillement de 6 s$^{-1}$ et de 5 000 à 10 000 mPa.s sous un cisaillement de 170 s$^{-1}$.

**14.** Procédé de fabrication d'un durcisseur tel que défini à l'une des revendications 1 à 13, caractérisé par le fait qu'on introduit dans une solution aqueuse du constituant (B), à une température de 15-30°C, successivement le constituant (A), puis le constituant (C), les constituants facultatifs étant introduits ultérieurement à la même température.

**15.** Mélange collant pour le collage du bois, en particulier pour la fabrication du contreplaqué, caractérisé par le fait qu'il est constitué par :

- une résine aqueuse aminoplaste choisie parmi les résines urée-formol et les résines mélamine-urée-formol ; et
- pour 100 parties en poids de ladite résine aqueuse aminoplaste, 5 à 30 parties en poids d'un durcisseur tel que défini à l'une des revendications 1 à 13.

**16.** Mélange collant selon la revendication 15, caractérisé par le fait que la résine présente un extrait sec de 63 à 69%.

**17.** Mélange collant selon l'une des revendications 15 et 16, caractérisé par le fait que la résine présente une viscosité initiale de 500 - 1500 mPa.s à 20°C.

**18.** Mélange collant selon l'une des revendications 15 à 17, caractérisé par le fait qu'il présente un temps de gel à 80°C de 90 à 240 secondes.

**19.** Mélange collant selon l'une des revendications 15 à 18, caractérisé par le fait qu'il présente une viscosité initiale à 20°C de 1000 - 5000 mPa.s, notamment de 2000 - 3000 mPa.s.

**20.** Mélange collant selon l'une des revendications 15 à 19, caractérisé par le fait qu'il présente une durée de vie en pot supérieure ou égale à 1 heure, en particulier supérieure ou égale à 2 heures.

**Office européen**

**des brevets**

# RAPPORT DE RECHERCHE EUROPEENNE

Numéro de la demande

EP 00 40 2933

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | CHEMICAL ABSTRACTS, vol. 80, no. 6, 11 février 1974 (1974-02-11) Columbus, Ohio, US; abstract no. 28679, OHNO ET AL: "Manufacture of bonding agent for wood" XP002141261 * abrégé * & JP 48 004173 B --- | 1-20 | C08G12/00 C08L1/28 C08K13/02 C08K3/00 C08K5/09 //(C08K13/02, 3:00,5:09) |
| X | DATABASE WPI Section Ch, Week 199413 Derwent Publications Ltd., London, GB; Class A97, AN 1994-107568 XP002141263 & SU 1 074 290 A (ZABOLOTNYI V I), 23 janvier 1993 (1993-01-23) * abrégé * --- | 1-20 | |
| X | DATABASE WPI Section Ch, Week 199602 Derwent Publications Ltd., London, GB; Class A93, AN 1996-018853 XP002141264 & RU 2 034 816 C (VOSTOKSIBORGSTROI CONSTR TECHN INST), 10 mai 1995 (1995-05-10) * abrégé * --- | 1-20 | **DOMAINES TECHNIQUES RECHERCHES (Int.Cl.7)**<br>C08G<br>C08L<br>C08K |
| X | CHEMICAL ABSTRACTS, vol. 118, no. 14, 5 avril 1993 (1993-04-05) Columbus, Ohio, US; abstract no. 126584, LEVCHENKO ET AL: "intumescent fireproofing coating composition" XP002141262 * abrégé * & SU 172 380 A ----- | 1-20 | |

Le présent rapport a été établi pour toutes les revendications

| Lieu de la recherche | Date d'achèvement de la recherche | Examinateur |
|---|---|---|
| LA HAYE | 6 février 2001 | Friederich, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 40 2933

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-02-2001

| Document brevet cité au rapport de recherche | Date de publication | Membre(s) de la famille de brevet(s) | Date de publication |
|---|---|---|---|
| JP 48004173 B | | AUCUN | |
| SU 1074290 A | 23-01-1993 | AUCUN | |
| RU 2034816 C | 10-05-1995 | AUCUN | |
| SU 172380 A | | AUCUN | |

EPO FORM P0460

Pour tout renseignement concernant cette annexe : voir Journal Officiel de l'Office européen des brevets, No.12/82